(19) Europäisches Patentamt

European Patent Office

Office européen des brevets

(11) **EP 0 808 057 B1**

(12) **EUROPEAN PATENT SPECIFICATION**

(45) Date of publication and mention
of the grant of the patent:
**13.12.2006 Bulletin 2006/50**

(51) Int Cl.:
***H04N 1/409*** (2006.01)

(21) Application number: **97107819.1**

(22) Date of filing: **13.05.1997**

(54) **Apparatus for and method of correcting output signal of linear image sensor**

Verfahren und Vorrichtung zum Korrigieren eines Ausgangssignals eines Zeilensensors

Procédé et appareil pour corriger des signaux de sortie d'un capteur d'image linéaire

(84) Designated Contracting States:
**DE FR GB**

(30) Priority: **17.05.1996 JP 12373496**

(43) Date of publication of application:
**19.11.1997 Bulletin 1997/47**

(73) Proprietor: **FUJI PHOTO FILM CO., LTD.
Minamiashigara-shi, Kanagawa-ken 250-0123
(JP)**

(72) Inventor: **Suganuma, Atsushi
Ashigarakami-gun,
Kanagawa-ken 258 (JP)**

(74) Representative: **Klunker . Schmitt-Nilson . Hirsch
Winzererstrasse 106
80797 München (DE)**

(56) References cited:
| | |
|---|---|
| **EP-A- 0 424 111** | **EP-A- 0 504 641** |
| **US-A- 3 775 559** | **US-A- 4 319 268** |
| **US-A- 4 860 118** | **US-A- 5 408 338** |

• **PATENT ABSTRACTS OF JAPAN vol. 018, no. 069
(E-1502), 4 February 1994 -& JP 05 284352 A
(ASAHI GLASS CO LTD), 29 October 1993**

**Description**

Field of the Invention:

The present invention relates to an apparatus for and a method of correcting an output signal from a linear image sensor such as a CCD (charge-coupled device) in an image reading system.

Description of the Related Art:

Image reading systems operate by applying illuminating light to a subject placed on a subject table, guiding light representing image information carried by the subject as reflected or transmitted light to a focusing optical system, and photoelectrically reading the light with a linear image sensor such as a CCD or the like. The subject is read in a main scanning direction by the linear image sensor while at the same time the subject is moved relatively to the linear image sensor in an auxiliary scanning direction that is substantially perpendicular to the main scanning direction, so that two-dimensional image information can be produced.

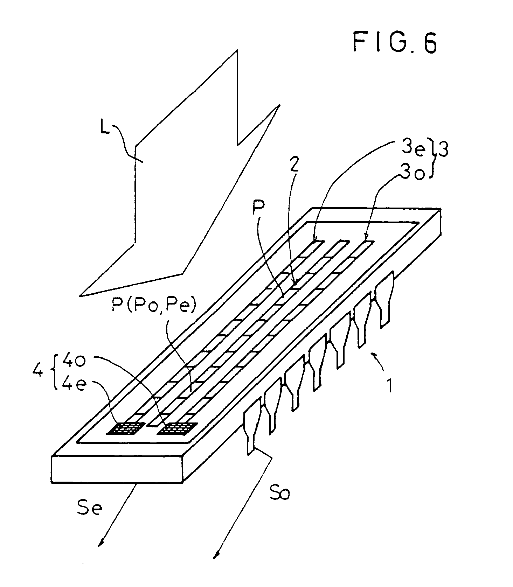

As schematically shown in FIG. 6 of the accompanying drawings, a general linear image sensor 1 basically comprises a photodetector 2 comprising a linear array of photoelectric transducer elements (hereinafter referred to as "pixels") P and a pixel transfer unit 3 comprising an odd-numbered pixel transfer array 30 and an even-numbered pixel transfer array 3e which are positioned one on each side of the photodetector 2. The pixels P include odd-numbered pixels Po and even-numbered pixels Pe. The pixel transfer unit 3 is covered with a metal film (not shown) such as an evaporated aluminum film or the like which shields the pixel transfer unit 3 from light L.

The light L which is detected by the photodetector 2 is converted into electric charges by the respective pixels P. The electric charges are successively shifted from the odd- and even-numbered pixels Po, Pe to the corresponding odd- and even-numbered pixel transfer arrays 3o, 3e in response to shift pulses that are periodically generated at constant time intervals. Thereafter, the electric charges are outputted as odd- and even-numbered pixel signals So, Se from odd- and even-numbered output sections 4o, 4e of FDAs (floating diffusion amplifiers) or the like through respective output terminals of the linear image sensor. 1.

The odd- and even-numbered pixel signals So, Se are alternately read through a variable-gain amplifier and a selector switch (not shown), and then converted by an A/D (analog-to-digital) converter (not shown) into a digital image signal, which is then stored in a line memory or the like.

Even when the odd- and even-numbered pixel signals So, Se are adjusted by the variable-gain amplifier such that their output amplitudes are equalized to each other under a certain constant light intensity of the light L, the digital image signal stored in the line memory has different levels respectively for the odd- and even-numbered pixel signals So, Se because of linearity differences of the odd- and even-numbered pixel signals So, Se, i.e., different changes in the amplitudes of the electric charges with respect to a small change in the light intensity. Specifically, if the odd- and even-numbered pixel signals So, Se are observed for their waveforms, then their levels suffer rectangular wave ripples. When an image is reproduced on the basis of the image signal, therefore, it contains periodic longitudinal stripes along the auxiliary scanning direction.

Therefore, an actual halftone-dot image outputted on the basis of the image signal contains a beat pattern produced by the superimposition of the periodic stripes and properties due to screen angles and screen ruling.

To eliminate the above shortcomings, it has been customary to carry out an odd- and even-numbered pixel level difference correction process with respect to the linear image sensor 1. According to the conventional odd- and even-numbered pixel level difference correction process, a corrected pixel signal Sc is determined from a pixel signal S which is to be corrected and a pixel signal Sp which precedes the pixel signal S, according to a moving average of the pixel signals S, Sp which is expressed by the following equation (1):

$$Sc = (Sp + S)/2 \qquad\qquad \cdots(1)$$

The odd- and even-numbered pixel level difference correction process based on the equation (1), however, is disadvantageous in that if an original image contains thin longitudinal stripes along the auxiliary scanning direction, then a reproduced image based on pixel signals corrected by the odd- and even-numbered pixel level difference correction process tends to be blurred due to a degradation of MTF (modulation transfer function).

In an attempt to minimize any degradation of MTF, the applicant of the present application has noticed that human visual perception has a low MTF with respect to a low-density area of a reproduced image (a highlight area of an original image) and a high MTF with respect to a high-density area of the reproduced image (a shadow area of the original image), and proposed a correction process for correcting pixel signals with moving averages of a constant weighting coefficient in a high-density area where the density is higher than a value of 2.0 and correcting pixel signals with moving averages of progressively smaller weighting coefficients in a low-density area where the density is lower than the value of 2.0.

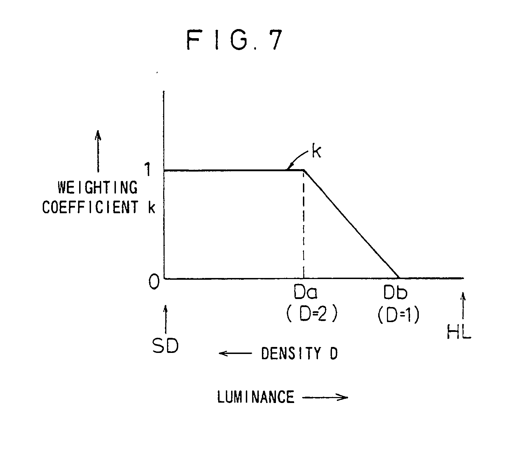

FIG. 7 of the accompanying drawings shows such weighting coefficients k used in the proposed correction process. In FIG. 7, the weighting coefficients k are represented by the vertical axis, and the density D represented by the horizontal axis becomes progressively smaller toward a highlight (HL) area and larger toward a shadow (SD) area. The luminance of the original image, which is represented by the horizontal axis, becomes progressively larger toward the highlight (HL) area and smaller toward the shadow (SD) area. According to the proposed correction process, a corrected pixel signal Sc is determined from two pixel signals S, Sp based on a moving average thereof using a weighting coefficient k, according to the following equation (2):

$$Sc = S - k\{S - (S + Sp)/2\} \qquad \cdots(2)$$

As can be understood from FIG. 7 and the equation (2), in a density area where the density D is higher than D = Da (actually, D = Da = 2.0), the weighting coefficient k has a value of 1, and hence the corrected pixel signal Sc is determined according to the equation (1). In a density area where the density D is lower than D = Db (actually, D = Db = 1.0), since the weighting coefficient k has a value of 0, the corrected pixel signal Sc is the same as the pixel signal Sc to be corrected (Sc = S). In a density area between the density Db and the density Da, the weighting coefficient k of the moving average is progressively larger from the density Db toward the density Da.

When level differences between the odd- and even-numbered pixel signals So, Se outputted from the linear image sensor 1 are corrected by moving averages of two successive pixel signals depending on the density D, any MTF degradations in an image which contains thin longitudinal stripes along the auxiliary scanning direction are minimized to a level which cannot visually be perceived.

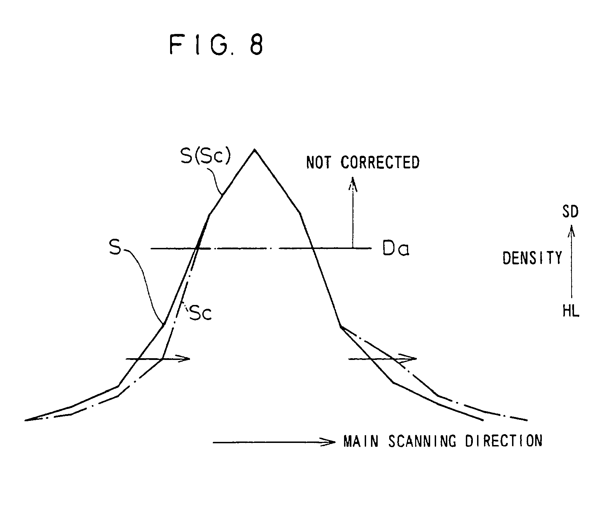

However, if the linear image sensor 1 has a greater dynamic range for finer reproduced images, then the correction process based on the equation (2) suffers problems. Specifically, according to the correction process based on the equation (2), the moving averages of two successive pixel signals are used as corrected image data in the low-density area where the density D is lower than the value D = Da. As shown in FIG. 8 of the accompanying drawings, the corrected image data thus produced is equivalent to a shift of the output image data by one half of a pixel in the main scanning direction. In the high-density area where the density D is higher than the value D = Da, because the pixel signals are not corrected, the output image data is not shifted. As a consequence, the reproduced image is subject to a one-sided edge phenomenon.

Such a one-sided edge phenomenon will be described in detail below. The image data of a reproduced image at a positive-going edge thereof in the main scanning direction is smaller than the original image data which are not corrected due to a data-reducing image data shift by half pixel in the main scanning direction, and the image data of a reproduced image at a negative-going edge thereof in the main scanning direction is larger than the original image data which is not corrected due to a data-increasing image data shift by half pixel in the main scanning direction. If a pixel signal which is outputted from the linear image sensor 1 with a greater dynamic range as representing a thin longitudinal stripe is corrected according to the correction process based on the equation (2), then the edge of the reproduced stripe image at a rear side thereof in the main scanning direction is blurred. As a result, the waveform of the reproduced stripe image has its center of gravity positionally shifted from the original image waveform in the main scanning direction.

An apparatus and a method for correcting each of odd-numbered pixel signals and even-numbered pixel signals according to the preamble of claim 1 and claim 3, respectively, are known from JP 05 284352 and PATENT ABSTRACTS OF JAPAN, Vol. 018, No. 069 (E-1502), 1994-02-04).

This reference discloses an apparatus having the features of the preamble of claim 1.

US-A-5 408 338 discloses an image processing system in which the intensity of each pixel can be corrected to be an average intensity of a predetermined number of pixels surrounding each pixel in a predetermined area. When it is judged that the pixel to be corrected is an edge pixel, the intensity of the pixel is corrected in accordance with the direction in which the edge faces.

US-A-4 860 118 discloses an image signal processing apparatus adapted to performing a reproduction magnification of an original, wherein an edge emphasis processing is carried out in accordance with a selected reproduction magnification of the original. After the edge emphasis processing has been carried out, a smoothing processing can be made in order to smoothen the reproduced image.

SUMMARY OF THE INVENTION

It is therefore an object of the present invention to provide an apparatus for and a method of correcting an output signal from a linear image sensor in a manner to prevent it from suffering a one-sided edge phenomenon, i.e., prevent the center of gravity of a reproduced image from being positionally shifted after the output signal has been processed by an odd- and even-numbered pixel level difference correction process.

Another object of the present invention is to provide an apparatus for and a method of correcting an output signal from a linear image sensor in a manner to prevent the center of gravity of a reproduced image from being positionally shifted after the output signal has been processed by an odd- and even-numbered pixel level difference correction process, and to effect the odd- and even-numbered pixel level difference correction process depending on the contents of an original image.

The above and other objects, features, and advan- tages of the present invention will become apparent from the following description when taken in conjunction with the accompanying drawings which illustrate a preferred embodiment of the present invention by way of example.

BRIEF DESCRIPTION OF THE DRAWINGS

FIG. 1 is a perspective view of an image reading system to which the present invention is applied;

FIG. 2 is a block diagram of a signal correcting apparatus according to the present invention;

FIG. 3 is a block diagram of a signal correcting circuit of the signal correcting apparatus shown in FIG. 2;

FIG. 4 is a diagram illustrate of a process of determining a moving averages of three pixel signals;

FIG. 5 is a diagram illustrative of a correction process depending on the density and contrast;

FIG. 6 a perspective view of a general linear image sensor;

FIG. 7 is a diagram illustrative of weighing coefficients used in a conventional process of determining moving averages of pixel signals; and

FIG. 8 is a diagram illustrative of problems of a conventional process of determining a moving average of two successive pixel signals.

DETAILED DESCRIPTION OF THE PREFERRED EMBODIMENT

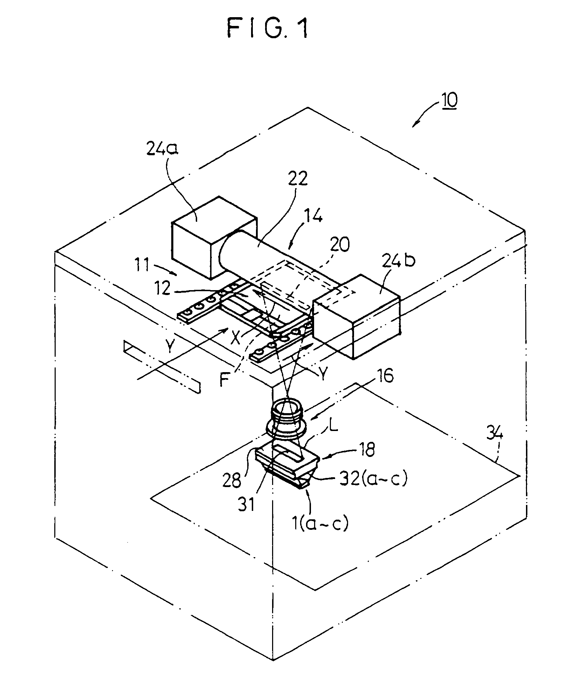

The present invention will be described below with reference to FIGS. 1 through 5. Those parts of FIGS. 1 through 5 which are identical to those shown in FIGS. 6 through 8 are denoted by identical reference numerals and representations, and will not be described in detail below. FIGS. 6 through 8 will also be referred to when necessary in the description of the present invention.

FIG. 1 schematically shows an image reading system 10 to which the present invention is applied. The image reading system 10 has a feed mechanism 11 which moves a subject cassette 12 in the direction indicated by the arrow Y (auxiliary scanning direction Y) and an illuminating optical system (illuminating light source) 14 which applies illuminating light to the subject cassette 12 in the direction indicated by the arrow X (main scanning direction X or line direction X). Image information recorded on a transmissive subject F which is carried by the subject cassette 12 is carried by transmitted light L, which is focused by a focusing optical system 16 comprising a plurality of converging lenses onto a focusing unit 18. The focusing unit 18 converts the focused light L to an electric signal.

The illuminating optical system 14 comprises a cylindrical diffusion chamber 22 having an inner light diffusion surface and a longitudinal slit 20, and a pair of light sources 24a, 24b mounted on the respective opposite ends of the cylindrical diffusion chamber 22 and each comprising a halogen lamp or the like.

The focusing unit 18 comprises a plurality of prisms 32a ~ 32c mounted on a lower surface of a base 28 having a slit 31 defined therein. The prisms 32a ~ 32c serve to separate the transmitted light into lights R, G, B. Linear image sensors 1a ~ 1c in the form of CCDs are fixed as photoelectric transducers to the respective prisms 32a ~ 32c. Each of the linear image sensors 1a ~ 1c is basically of the same structure as the linear image sensor shown in FIG. 6.

Odd- and even-numbered pixel signals So, Se outputted from the linear image sensors 1a ~ 1c are supplied through a flexible printed circuit to a signal processing board 34.

The linear image sensors 1a ~ 1c effect an identical process of odd- and even-numbered pixel level difference correction as described below. The linear image sensors 1a ~ 1c will therefore be referred to collectively as a linear image sensor 1 unless they should separately be described.

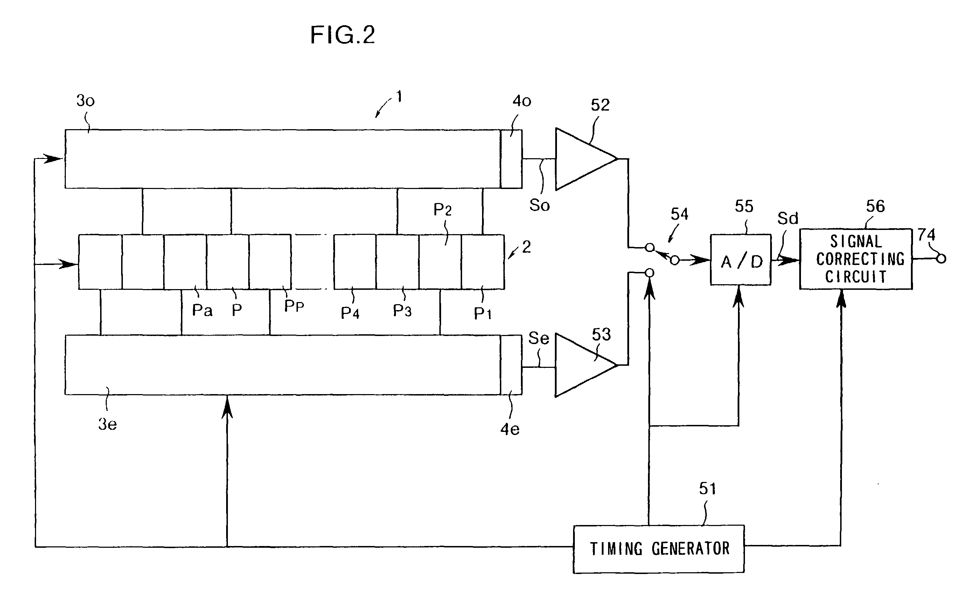

FIG. 2 schematically shows the linear image sensor 1 of the focusing unit 18 and a signal correcting apparatus according to the present invention for correcting level differences between the odd- and even-numbered pixel signals So, Se that are outputted from the linear image sensor 1.

As shown in FIG. 2 (see also FIG. 6), the transmitted light which carries the image information detected by the photodetector 2 is converted by the photoelectric transducer pixels P into electric charges, which are successively shifted from the odd- and even-numbered pixels P (P1, P2, P3, P4, ⋯) to the corresponding odd- and even-numbered pixel transfer arrays 3o, 3e in response to shift pulses that are periodically outputted from a timing generator (timing controller) 51. Thereafter, the electric charges are outputted as odd- and even-numbered pixel signals So, Se from odd- and even-numbered output sections 4o, 4e of FDAs (floating diffusion amplifiers) or the like through respective output terminals of the linear image sensor 1 in response to transfer clock pulses from the timing generator 51.

The odd- and even-numbered pixel signals So, Se are supplied through variable-gain amplifiers 52, 53 and a selector switch (multiplexer) 54, which are on the signal processing board 34, alternately in the sequence of pixels (P1, P2, ...) to an A/D (analog-to-digital) converter 55 having a 14-bit resolution. The A/D converter 55 converts the odd- and even-numbered pixel signals So, Se, which are analog signals, to digital image signals Sd that are supplied to a signal correcting circuit 56 which serves as an odd- and even-numbered pixel level difference correction circuit.

For faster signal processing, A/D converters 55 may be connected parallel to each other to the output terminals of the respective variable-gain amplifiers 52, 53, and output digital signals from the A/D converters 55 may be switched by the multiplexer 54.

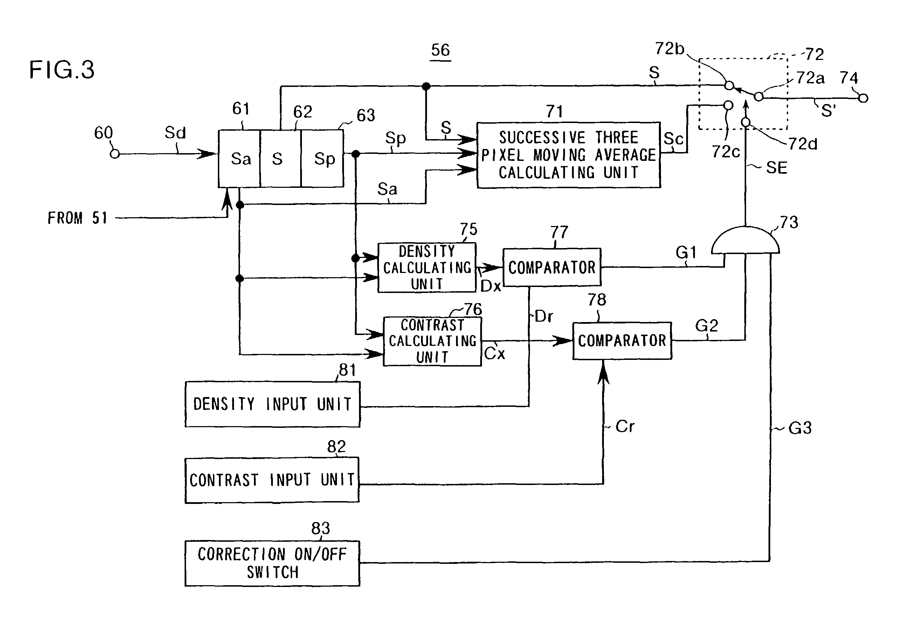

FIG. 3 shows the signal correcting circuit 56 as an odd- and even-numbered pixel level difference correction circuit in greater detail.

As shown in FIG. 3, the image signals Sd are supplied from the A/D converter 55 through an input port 60. The image signals are stored in FIFO shift registers (storage means referred to as registers) 61, 62, 63 serving as memory means under the control of a CPU (control means). If the register 62 stores the level S of a pixel signal S, then the register 63 stores the level Sp of a pixel signal (preceding pixel signal) Sp which precedes the pixel signal S, and the register 61 stores the level Sa of a pixel signal (following pixel signal) Sa which follows the pixel signal S.

In synchronism with a pixel clock pulse from the timing generator 51, the level Sp of the pixel signal Sd of a certain pixel Pp (see FIG. 2) is stored in the register 61. Then, in synchronism with a next pixel clock pulse, the level Sp stored in the register 61 is shifted to the register 62, and the level S of the pixel signal Sd of a next pixel P is stored in the register 61. In synchronism with a next pixel clock pulse, the levels Sp, S are shifted from the registers 62, 61 respectively to the registers 63, 62, and the level Sa of the pixel signal of a next pixel Pa is stored in the register 61. Subsequently, each time a new pixel block pulse is applied, the pixel signals stored in the registers 61, 62, 63 are updated in the manner described above.

When the pixel signal S stored in the central register 62 is an odd-numbered pixel signal So (though it is denoted by "So" used for an analog pixel signal in FIG. 2, it is actually a digital signal when stored in the register), the pixel signals stored in the registers 61, 63 on the opposite sides of the central register 62 are even-numbered pixel signals Se (though they are denoted by "Se" used for analog pixel signals in FIG. 2, they are actually digital signals when stored in the registers). When the pixel signal S stored in the central register 62 is an even-numbered pixel signal Se, the pixel signals stored in the registers 61, 63 are odd-numbered pixel signals So.

The three successive pixel signals Sp, S, Sa are supplied to a successive three pixel weighted moving average calculating unit (calculating means) 71. The successive three pixel moving average calculating unit 71 calculates a weighted moving average of three successive pixels according to the equation (3), given below, and outputs a level Sc of a calculated pixel signal Sc.

$$Sc = (S + U)/2 = \{S + (Sp + Sa)/2\}/2$$
$$= (Sp + 2S + Sa)/4 \qquad \cdots(3)$$

where U represents the average level of the preceding pixel signal Sp preceding the pixel signal S and the following pixel signal Sa following the pixel signal S.

In FIG. 3, the pixel signal S is supplied from the register 62 to a terminal 72b of a selector switch or multiplexer (selecting means) 72, and the calculated pixel signal (corrected pixel signal) Sc is supplied from the successive three pixel weighted moving average calculating unit 71 to another terminal of the selector switch 72. The selector switch 72 has a 72c control terminal 72d supplied with a selection control signal SE from a three-input AND gate (logic means) 73 which is part of the selecting means. The selector switch 72 also has a common terminal 72a which is selectively connected to the terminal 72c when the selection signal SE is of a high level and to the terminal 72b when the selection signal SE is of a low level.

The pixel signal S or a corrected pixel signal S' which is the calculated pixel signal Sc is outputted from the selector switch 72 to an output terminal 74 for further processing.

The preceding and following pixel signals Sp, Sa are supplied from the registers 63, 61 to a density calculating unit 75 and a contrast calculating unit 76. The density calculating unit 75 calculates a density dependent signal Dx (which is the same as the average U) according to the equation (4), given below, and supplies the density dependent signal Dx to a comparator 77. The contrast calculating unit 76 calculates a contrast dependent signal Cx according to the equation (5), given below, and supplies the contrast dependent signal Cx to a comparator 78.

$$Dx = (Sp + Sa)/2 \qquad \cdots (4)$$

$$Cx = |Sp - Sa| \qquad \cdots (5)$$

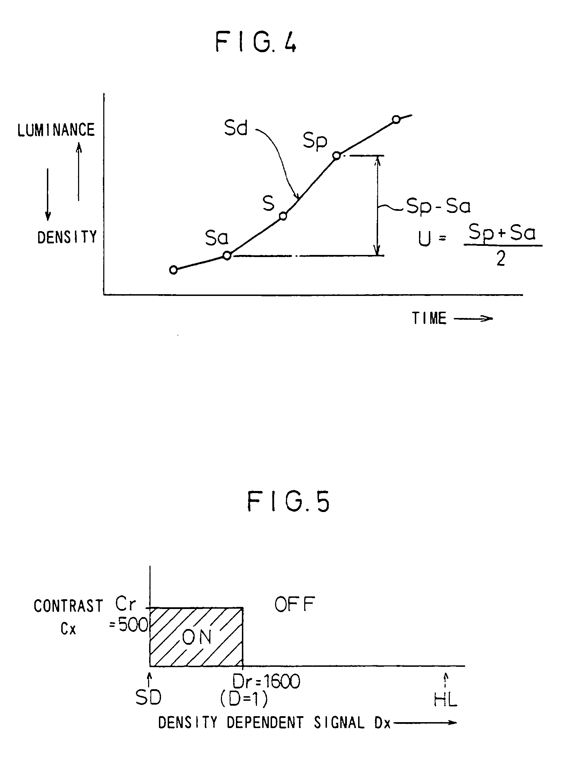

In the illustrated embodiment, when the density dependent signal Dx which is a luminance signal has a large value, it represents a low density (a highlight area of the original image), and when the density dependent signal Dx has a small value, it represents a high density (a shadow area of the original image) (see the horizontal axis of FIG. 5).

A desired reference density signal (reference density) Dr (whose value or level is also denoted by Dr), serving as a first reference value, is supplied from a density input unit 81 comprising a data input unit such as a keyboard to the comparator 77. A desired reference contrast signal Cr (whose value or level is also denoted by Cr), serving as a second reference value, is supplied from a contrast input unit 82 to the comparator 78. A correction on/off switch 83 outputs a correction on/off signal G3 (G3 = 1 (high level) for turning on the correction process, and G3 = 0 (low level) for turning off the correction process) to an input terminal of the three-input AND gate 73.

The comparator 77 compares the density dependent signal Dx with the reference density signal Dr, and outputs a binary comparison result signal G1 according to the formulas (6), given below. The comparator 78 compares the contrast dependent signal Cx with the reference contrast signal Cr, and outputs a binary comparison result signal G2 according to the formulas (7), given below.

$$Dx \geq Dr \qquad \rightarrow \qquad G1 = 0$$
$$Dx < Dr \qquad \rightarrow \qquad G1 = 1 \qquad \cdots (6)$$

$$Cx \geq Cr \qquad \rightarrow \qquad G2 = 0$$
$$Cx < Cr \qquad \rightarrow \qquad G2 = 1 \qquad \cdots (7)$$

In the illustrated embodiment, as shown in FIG. 5, the reference density level Dr is set to the density D = 1.0, i.e., a value of 1600 in terms of a 14-bit luminance level, and the contrast density level Cr is set to a value of 500 in terms of a 14-bit luminance level. The reference density level Dr and the contrast density level Cr are determined in view of the overall characteristics of an image reading and platemaking system including a halftone dot image output apparatus (not shown) connected to the image reading system 10 shown in FIG. 1.

When all the comparison result signals G1, G2 and the correction on/off signal G3 are high in level, the selection control signal SE from the 3-input AND gate 73 goes high in level, causing the selector switch 72 to output the calculated pixel signal Sc as the corrected pixel signal S'. When either one of the comparison result signals G1, G2 and the correction on/off signal G3 is low in level, the selection control signal SE from the 3-input AND gate 73 goes low in level, causing the selector switch 72 to output the original pixel signal S as the corrected pixel signal S'.

Operation of the image reading system 10 including the signal correcting apparatus according to the present invention will be described below.

The odd- and even-numbered pixel signals So, Se outputted from the linear image sensor 1 in response to the application of the light L that has passed through the transmissive subject F are alternately introduced in the sequence of pixels by the selector switch 54, and converted by the 14-bit A/D converter 55 to digital image signals Sd that are supplied to the signal correcting circuit 56, which effects the following correction process on the digital image signals Sd:

Three successive pixel images Sp, S, Sa are successively stored in the respective registers 61, 62, 63.

For generating a corrected image signal S' with respect to the pixel signal S to be corrected, a moving average signal Sc relative to the three successive pixel images Sp, S, Sa is produced according to the equation (3).

The density calculating unit 75 calculates a density dependent signal Dx according to the equation (4) which represents an average of the preceding and following pixels signals Sp, Sa. The signal correcting circuit 56 outputs the moving average signal Sc as the corrected image signal S' in view of the fact that the MTF of the human visual perception is high when the density of an image is high. Specifically, the signal correcting circuit 56 outputs the moving average signal Sc as the corrected image signal S' when the density of the reproduced image is high, i.e., higher than the density D = 1.0 or the corresponding luminance is lower than the reference luminance level Dr = 1600, and also when the level of the contrast dependent signal Cx obtained as the difference between the preceding and following pixel signals Sp, Sa is smaller than the reference contrast level Cr = 500 (i.e., a hatched area "ON" in FIG. 5), or stated otherwise, when longitudinal stripes at a constant pitch which are caused on the basis of level differences between the odd- and even-numbered pixel signals because the density difference (luminance difference) is small are more likely to be visually perceptible, the signal correcting circuit 56 outputs the moving average signal Sc relative to the three successive pixel signals as the corrected image signal S'.

Consequently, the longitudinal stripes at a constant pitch which are caused on the basis of level differences between the odd- and even-numbered pixel signals are made less visually perceptible to the observer of the reproduced image. Since the corrected image signal S' = Sc represents a moving average of the three successive pixel signals including the pixel signal to be corrected, the waveform of the corrected image signal S' = Sc has its center of gravity positionally unshifted.

When the density dependent signal Dx, which is an average of the preceding and following pixel signals Sp, Sa, is larger than the reference luminance level Dr = 1600, i.e., the density D is lower than the density D = 1 or the luminance is closer to the highlight area of the original image, or when the contrast dependent signal Cx is higher than the reference contrast level Cr = 500 (i.e., an unhatched "OFF" area in FIG. 5), the signal correcting circuit 56 outputs the pixel signal S as the corrected image signal S'. Under this condition, the reproduced image remains as sharp as the original image.

Based on the corrected pixel signal S', halftone-dot % data of C, M, Y, K are generated and converted into binary bit-map data based on desired screen angles and screen ruling. Then, halftone dot image films are generated on the basis of the binary data, and presensitized plates are produced from the halftone dot image films. Thereafter, a printed document carrying a reproduced halftone dot image is created using the presensitized plates. On the printed document, the reproduced halftone dot image is free of blurred image areas due to a one-sided edge phenomenon, and hence constitutes an accurate representation of the original image, which remains as sharp and fine as the original image.

As described above, final values of the reference density level Dr and the contrast density level Cr should preferably be determined through image quality evaluations in view of the overall characteristics of the image reading and platemaking system.

In the above embodiment, the correction process is carried out using luminance signals. However, the correction process may be carried out using density signals converted from the luminance signals.

With the arrangement of the present invention, as described above, a pixel signal outputted from the linear image sensor is corrected according to the odd- and even-numbered pixel level difference correction process using the levels of three successive pixel signals including the pixel signal as the central pixel signal. Stated otherwise, the pixel signal is corrected by processing the level of the pixel signal to be corrected and the levels of the other pixel signals that precede and follow the pixel signal to be corrected. As a result, the center of gravity of the waveform of the corrected image or pixel signal is not positionally shifted unlike the conventional correction process which uses only the pixel signal to be corrected and the pixel signal that precedes the pixel signal to be corrected.

The level Sc of a corrected pixel signal is calculated by the following equation:

$$Sc = (Sp + 2S + Sa)/4$$

where S represents the level of a pixel signal to be corrected, Sp the level of a pixel signal which precedes the pixel signal to be corrected, and Sa the level of a pixel signal which follows the pixel signal to be corrected. Consequently, the odd- and even-numbered pixel level difference correction process can be performed by relatively simple calculations, and the center of gravity of the waveform of the corrected pixel signal remains positionally unshifted.

Furthermore, the pixel signal to be corrected or the corrected pixel signal is selected and outputted on the basis of the average of and the difference between the pixel signals preceding and following the pixel signal to be corrected. Therefore, whether the pixel signal to be corrected or the corrected pixel is to be selected and outputted can be determined on the basis of the density of an image corresponding to the average of the preceding and following pixel signals and the contrast of an image corresponding to the difference between the preceding and following pixel signals. As a result, the odd- and even-numbered pixel level difference correction process can be performed on the linear image sensor accurately depending on the contents of the original image.

When the average {(Sp + Sa)/2} of the levels of the preceding and following pixel signals is relatively small (smaller than the first reference value Dr), i.e., the density of the original image is high, and also when the absolute value of the difference (Sp - Sa) between the levels of the preceding and following pixel signals is relatively small (smaller than the second reference value Cr), i.e., the contrast is small, or stated otherwise, when longitudinal stripes which are caused on the basis of level differences between the odd- and even-numbered pixel signals are more likely to be visually perceptible, the level Sc of the corrected pixel signal is outputted. Otherwise, the level S of the pixel signal to be corrected, i.e., the uncorrected pixel signal, is outputted. Thus, the center of gravity of the waveform of the corrected pixel signal remains positionally unshifted, and whether the pixel signal to be corrected or the corrected pixel is to be selected and outputted can be determined on the basis of the density of an image corresponding to the average of the preceding and following pixel signals and the contrast of an image corresponding to the difference between the preceding and following pixel signals.

To put it more generally, only when the average of the levels of pixel signals preceding and following a pixel signal to be corrected is relatively small, i.e., the density of an original image is high, and when the absolute value of the difference between those preceding and following pixel signals is relatively small, i.e., the contrast of the original image is small, or state otherwise, only when visually perceptible longitudinal stripes caused on the basis of level differences between the odd- and even-numbered pixel signals are predicted, a moving average signal relative to three successive pixel signals is used as a corrected pixel signal for thereby removing an wanted stepwise change from an output image in the presence of the level differences between the odd- and even-numbered pixel signals. When the density of the original image is low or the contrast thereof is high, since any stepwise change in an output image owing to level differences between the odd- and even-numbered pixel signals is not easily recognizable, the pixel signal to be corrected is outputted uncorrected. As a consequence, the reproduced image remains as sharp as the original image.

Although a certain preferred embodiment of the present invention has been shown and described in detail, it should be understood that various changes and modifications may be made therein without departing from the scope of the appended claims.

**Claims**

1.  An apparatus for correcting each of odd-numbered pixel signals (So) and even-numbered pixel signals (Se) outputted from a linear image sensor (1) and alternately read to produce an image signal (Sd), comprising:

    storage means (61 ~ 63) for storing a level (S) of a pixel signal to be corrected and levels (Sp, Sa) of preceding and following pixel signals which precede and follow said pixel signal to be corrected; and
    calculating means (71) connected to said storage means (61 ~ 63), for processing said level (S) of the pixel signal to be corrected and said levels (Sp, Sa) of preceding and following pixel signals to produce a corrected pixel signal (Sc); wherein said calculating means (71) comprises means for determining the level (Sc) of the corrected signal according to the equation:

$$Sc = (Sp + 2S + Sa)/4$$

    where S represents the level of the pixel signal to be corrected, Sp the level of the preceding pixel signal, and Sa the level of the following pixel signal,
    **characterized by** selecting means (72, 73, 75, 76, 77, 78) for selecting and outputting the pixel signal to be corrected or the corrected pixel signal (Sc) based on an average (Dx) of and a difference (Cx) between the levels (Sp, Sa) of preceding and following pixel signals, and wherein said selecting means comprise means for selecting and outputting the corrected pixel signal (Sc) when the average {(Sp + Sa)/2} of the levels (Sp, Sa) of the preceding and following pixel signals is smaller than a first reference value and the absolute value of the difference (Sp - Sa) between the levels (Sp, Sa) of the preceding and following pixel signals is smaller than a second reference value, and selecting and outputting the pixel signal to be corrected otherwise.

2.  An apparatus according to claim 1, wherein said linear image sensor comprises a CCD linear image sensor.

3.  A method of correcting each of odd-numbered pixel signals (So) and even-numbered pixel signals (Se) outputted from a linear image sensor (1) and alternately read to produce an image signal (Sd), comprising the step of:

    processing a pixel signal (S) to be corrected and preceded and following pixel signals (Sp, Sq) which precede and follow said pixel signal to be corrected to produce a corrected pixel signal (Sc), wherein said processing step comprises the step of calculating a first average value ((Sp+2S+Sa)/4) of said pixel signal (S) to be corrected and second average ((Sp+Sa)/2) of said preceding and following pixel signals,
**characterized by** outputting said first average value ((Sp + 2S + Sa)/4) as the corrected pixel signal (Sc) when the density of the second average ((Sp + Sa)/2) of said preceding and following pixel signals (Sp, Sa) is higher than a predetermined density value and the contrast (Sa-Sp), calculated on the basis of the absolute value of the difference between the levels (Sp, Sa) of said preceding and following pixel signals, is smaller than a predetermined contrast value, and outputting the pixel signal (S) to be corrected as said corrected pixel signal otherwise.

4. A method according to claim 3, wherein said linear image sensor comprises a CCD linear image sensor.

**Patentansprüche**

1. Vorrichtung zum Korrigieren jedes einer ungeraden Anzahl von Pixelsignalen (So) und einer geraden Anzahl von Pixelsignalen (Se), die von einem linearen Bildsensor (1) ausgegeben und abwechselnd gelesen werden, um ein Bildsignal (Sd) zu bilden, umfassend:

eine Speichereinrichtung (61-63) zum Speichern eines Pegels (S) eines zu korrigierenden Pixelsignals und von Pegeln (Sp, Sa) eines vorausgehenden und eines nachfolgenden Pixelsignals, die dem zu korrigierenden Pixelsignal vorausgehen bzw. nachfolgen; und
eine Berechnungseinrichtung (71), die an eine Speichereinrichtung (61-63) angeschlossen ist, um den Pegel (S) des zu korrigierenden Pixelsignals und die Pegel (Sp, Sa) des vorausgehenden und nachfolgenden Pixelsignals zu verarbeiten und ein korrigierendes Pixelsignal (Sc) zu erzeugen, wobei die Berechnungseinrichtung (71) eine Einrichtung aufweist, um den Pegel (Sc) des korrigierten Signals gemäß folgender Gleichung zu bestimmen:

$$Sc = (Sp + 2S + Sa)/4$$

wobei S den Pegel des zu korrigierenden Pixelsignals, Sp den Pegel des vorhergehenden Pixelsignals und Sa den Pegel des nachfolgenden Pixelsignals bedeutet,
**gekennzeichnet durch** eine Auswahleinrichtung (72, 73, 75, 76, 77, 78) zum Auswählen und Ausgeben des zu korrigierenden Pixelsignals oder des korrigierten Pixelsignals (Sc) basierend auf einem Durchschnitt (Dx) der oder einer Differenz (Cx) zwischen den Pegeln (Sp, Sa) des vorausgehenden und des nachfolgenden Pixelsignals, wobei die Auswahleinrichtung eine Einrichtung aufweist zum Auswählen und Ausgeben des korrigierten Pixelsignals (Sc), wenn der Durchschnittswert {(Sp + Sa)/2} der Pegel (Sp, Sa) des vorhergehenden und des folgenden Pixelsignals kleiner ist als ein erster Referenzwert, und der Absolutwert der Differenz (Sp-Sa) zwischen den Pegeln (Sp, Sa) des vorhergehenden und des nachfolgenden Pixelsignals kleiner als ein zweiter Referenzwert ist, und zum Auswählen und Ausgeben des zu korrigierenden Pixelsignals sonst.

2. Vorrichtung nach Anspruch 1, bei der der lineare Bildsensor ein linearer CCD-Bildsensor ist.

3. Verfahren zum Korrigieren jedes aus einer ungeraden Anzahl von Pixelsignalen (So) und einer geraden Anzahl von Pixelsignalen (Se), die von einem linearen Bildsensor (1) ausgegeben und abwechselnd gelesen werden, um ein Bildsignal (Sd) zu erzeugen, umfassend folgende Schritte:
Verarbeiten eines zu korrigierenden Pixelsignals (S) und eines vorausgehenden und nachfolgenden Pixelsignals (Sp, Sa), die dem zu korrigierenden Pixelsignal vorausgehen bzw. nachfolgen, um ein korrigiertes Pixelsignal (Sc) zu erzeugen, wobei der Verarbeitungsschritt den Schritt beinhaltet, bei dem ein erster Durchschnittswert ((Sp + 2S + Sa)/4) des zu korrigierenden Pixelsignals (S) und ein zweiter Durchschnittswert ((Sp + Sa)/2) des vorhergehenden und des nachfolgenden Pixelsignals berechnet werden, **dadurch gekennzeichnet, dass** der erste Durchschnittswert ((Sp + 2S + Sa)/4) als das korrigierte Pixelsignal (Sc) ausgegeben wird, wenn die Dichte des zweiten Durchschnittswerts ((Sp + Sa)/2) des vorhergehenden und des nachfolgenden Pixelsignals (Sp, Sa) größer ist als ein vorbestimmter Dichtewert, und der Kontrast (Sa-Sp), der auf der Grundlage des Absolutwerts der Differenz zwischen den Pegeln (Sp, Sa) des vorhergehenden und des nachfolgenden Pixelsignals berechnet wird, kleiner als ein vorbestimmter Kontrastwert ist, ansonsten das zu korrigierende Pixelsignal (S) als das korrigierte Pixelsignal ausgegeben wird.

**4.** Verfahren nach Anspruch 3, bei dem der lineare Bildsensor einen linearen CCD-Bildsensor aufweist.

**Revendications**

**1.** Dispositif pour corriger chacun des signaux (So) de pixels à numéro impair et des signaux (Se) de pixels à numéro pair, émis en sortie d'un capteur (1) d'image linéaire et lus en alternance pour produire un signal (Sd) d'image, comprenant :

des moyens (61 à 63) de stockage, destinés à stocker un niveau (S) de signal de pixel à corriger et des niveaux (Sp, Sa) de signaux de pixels précédent et suivant qui précèdent et suivent ledit signal de pixel à corriger ; et un moyen (71) de calcul, connecté auxdits moyens (61 à 63) de stockage, destiné à traiter ledit niveau (S) du signal de pixel à corriger et lesdits niveaux (Sp, Sa) de signaux de pixels précédent et suivant, pour produire un signal (Sc) de pixel corrigé ; ledit moyen (71) de calcul comprenant un moyen destiné à déterminer le niveau (Sc) du signal corrigé, selon l'équation :

$$Sc = (Sp + 2S + Sa)/4$$

où S représente le niveau du signal de pixel à corriger, Sp le niveau du signal de pixel précédent et Sa le niveau du signal de pixel suivant,
**caractérisé par** des moyens (72, 73, 75, 76, 77, 78), destinés à sélectionner et à délivrer en sortie le signal de pixel à corriger ou le signal (Sc) de pixel corrigé, sur la base d'une moyenne (Dx) des niveaux (Sp, Sa) des signaux de pixels précédent et suivant et d'une différence (Cx) entre ceux-ci, et dans lequel lesdits moyens de sélection comprennent un moyen destiné à sélectionner et à délivrer en sortie le signal (Sc) de pixel corrigé, lorsque la moyenne {(Sp + Sa)/2} des niveaux (Sp, Sa) des signaux de pixels précédent et suivant, est inférieure à une première valeur de référence et que la valeur absolue de la différence (Sp - Sa) entre les niveaux (Sp, Sa) des signaux de pixels précédent et suivant est inférieure à une deuxième valeur de référence, et à défaut, à sélectionner et à délivrer en sortie le signal de pixel à corriger.

**2.** Dispositif selon la revendication 1, dans lequel ledit capteur d'image linéaire comprend un capteur d'image linéaire CCD.

**3.** Procédé pour corriger chacun des signaux (So) de pixels à numéro impair et des signaux (Se) de pixels à numéro pair, émis en sortie d'un capteur (1) d'image linéaire et lus en alternance pour produire un signal (Sd) d'image, comprenant l'étape consistant à :

traiter un signal (S) de pixel à corriger et des signaux (Sp, Sa) de pixels précédent et suivant qui précèdent et suivent ledit signal de pixel à corriger, pour produire un signal (Sc) de pixel corrigé, dans lequel ladite étape de traitement comprend l'étape consistant à calculer une première valeur moyenne {(Sp + 2S + Sa)/4} dudit signal (S) de pixel à corriger et une deuxième moyenne {(Sp + Sa)/2} desdits signaux de pixels précédent et suivant, **caractérisée par** le fait d'émettre en sortie ladite première valeur moyenne {(Sp + 2S + Sa)/4}, en tant que signal (Sc) de pixel corrigé, lorsque la densité de la deuxième moyenne {(Sp + Sa)/2} desdits signaux (Sp, Sa) de pixels précédent et suivant, est supérieure à une valeur de densité prédéterminée et que le contraste (Sa - Sp), calculé sur la base de la valeur absolue de la différence entre les niveaux (Sp, Sa) desdits signaux de pixels précédent et suivant, est inférieur à une valeur de contraste prédéterminée, et par le fait d'émettre en sortie à défaut, le signal (S) de pixel à corriger, en tant que signal de pixel corrigé.

**4.** Procédé selon la revendication 3, dans lequel ledit capteur d'image linéaire comprend un capteur d'image linéaire CCD.

# F I G. 1

# FIG.2

EP 0 808 057 B1

FIG.3

# FIG. 4

LUMINANCE

DENSITY

Sd

Sp

S

Sa

Sp-Sa

$U = \dfrac{Sp+Sa}{2}$

TIME →

# FIG. 5

CONTRAST
Cx

Cr
=500

OFF

ON

Dr=1600
(D=1)

SD

HL

DENSITY DEPENDENT SIGNAL Dx →

FIG. 6

# F I G. 7

# F I G. 8